# EUROPÄISCHE PATENTANMELDUNG

(11) **EP 0 870 976 A2**
(43) Veröffentlichungstag der Anmeldung: **14.10.1998**
(21) Anmeldenummer: 98106009.8
(22) Anmeldetag: 02.04.1998
(51) Int. Cl.: F21S 5/00, F21V 5/06, F21V 8/00

(54) **Leuchte**

(30) Priorität: 11.04.1997 AT 221/97
(71) Anmelder: D. Swarovski & Co., 6112 Wattens (AT)
(72) Erfinder: Swarovski, Daniel, 6112 Wattens (AT)
(74) Vertreter: Torggler, Paul Norbert

(57) **Zusammenfassung**

Leuchte, insbesondere Deckenleuchte, mit mehreren reflektierenden und/oder lichtbrechenden Körpern, insbesondere facettierten Glaselementen, die mit über mehrere optische Lichtleitfasern geführtem Licht angestrahlt werden, wobei die Endbereiche der Lichtleitfasern in zumindest einem Träger gehalten sind. Die reflektierenden und/oder lichtbrechenden Körper (1) sind einzeln oder in Gruppen jeweils am Träger (2) befestigt.

## Beschreibung

Die Erfindung betrifft eine Leuchte, insbesondere Deckenleuchte, mit mehreren reflektierenden und/oder lichtbrechenden Körpern, insbesondere facettierten Glaselementen, die mit über mehrere optische Lichtleitfasern geführtem Licht ausgestrahlt werden, wobei die Endbereiche der Lichtleitfasern in zumindest einem Träger gehalten sind.

Eine derartige Leuchte ist aus der DE-A-195 36 440 bekannt. Dort wird ein von der Decke hängender Lüster mit Licht beleuchtet, das aus Lichtleitfasern stammt, die über die Decke verteilt im Deckenbereich enden.

Zur Erzielung einer definierteren Lichtverteilung und einer homogeneren Lichtaustrittsfläche ist erfindungsgemäß vorgesehen, daß die reflektierenden und/oder lichtbrechenden Körper einzeln oder in Gruppen jeweils am Träger befestigt sind.

Eine solche Einzelbefestigung bzw. Befestigung in kleinen Gruppen von wenigen Glaselementen erlaubt es, diese über eine relativ große Fläche, beispielsweise in einer gedachten Ebene oder einer leicht gekrümmten gedachten Fläche, nebeneinander anzuordnen und auf der dem Betrachter abgewandten Seite gezielt durch eine Vielzahl von Lichtleitfasern zu beleuchten. Insbesondere ist es möglich, eine einzige Lage aus nebeneinanderliegenden reflektierenden und lichtbrechenden Körpern zu realisieren, die nach außen ein homogenes Erscheinungsbild liefert und dennoch eine hohe Brillianz aufweist. Darüber hinaus erlaubt die erfindungsgemäße Aufhängung der reflektierenden und/oder lichtbrechenden Körper eine Ausbildung der Leuchte, insbesondere Deckenleuchte mit geringer Bauhöhe, sodaß sie auch in Räumen mit normaler Raumhöhe eingesetzt werden kann.

Besonders günstig ist es, wenn zumindest ein Teil der reflektierenden und/oder lichtbrechenden Körper jeweils einzeln über gesonderte Befestigungsvorrichtungen am Träger - vorzugsweise mit Abstand zu diesem - befestigt ist. Grundsätzlich kommen verschiedene Befestigungsvorrichtungen in Frage, beispielsweise Seile, Drähte, Ketten, Halteklammern oder Halter aus starrem Material. Bei ein und derselben Leuchte können günstigerweise auch verschiedene dieser Befestigungsvorrichtungen zum Einsatz kommen. Grundsätzlich besteht auch die Möglichkeit, die reflektierenden und/oder lichtleitenden Körper am Träger festzukleben. Günstiger erscheinen jedoch Halter, die einen Abstand zwischen Träger und den Körpern zulassen, weil dann die Lichtleitfasern im Raum zwischen den Körpern und dem Träger enden können und somit die Körper auf der dem Betrachter abgewandten Seite beleuchten. Das Licht dringt dann praktisch durch die Körper bzw. zwischen den Körpern aus der Leuchte aus.

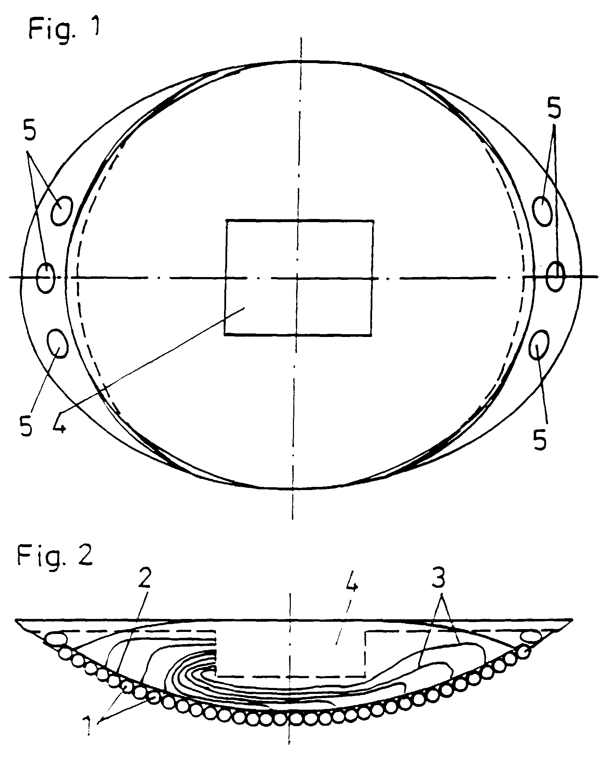

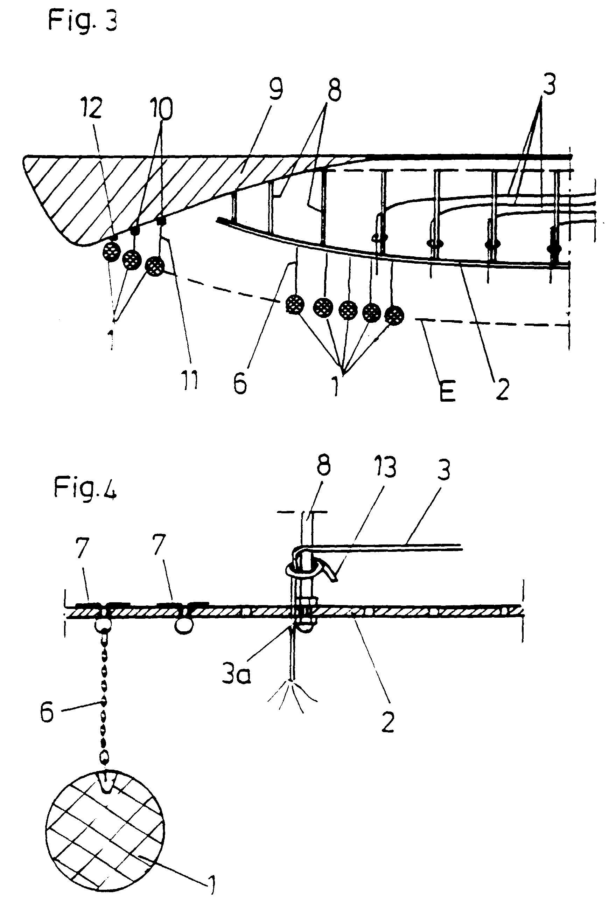

Weitere Vorteile und Einzelheiten der Erfindung werden anhand der nachfolgenden Figurenbeschreibung näher erläutert. Die Fig. 1 und 2 zeigt ein erstes Ausführungsbeispiel in einer schematischen Unteransicht bei abgenommenem Träger, die Fig. 2 einen schematischen Querschnitt. Die Fig. 3 zeigt einen schematischen Querschnitt durch ein weiteres Ausführungsbeispiel der erfindungsgemäßen Leuchte, wobei nur die linke Leuchtenhälfte dargestellt ist. Die Fig. 4 zeigt ein Detail der Aufhängung bei der in Fig. 3 gezeigten Leuchte.

Die in den Fig. 1 und 2 dargestellte Leuchte weist mehrere reflektierende und/oder lichtbrechende Körper 1, im vorliegenden Fall facettierte Glaselemente, wie sie beispielsweise als Lusterbehang zum Einsatz kommen, auf. Diese reflektierenden und/oder lichtleuchtenden Körper sind und an einem Träger 2 befestigt, beispielsweise festgeklebt. Die Beleuchtung erfolgt über Lichtleitfasern 3, in die Licht über eine Lichtquelleneinheit 4 eingespeist wird. Diese kann beispielsweise eine Halogenlampe und einen Reflektor in an sich bekannter Bauweise aufweisen. Die Lichtleitfasern können insbesondere Glasfasern sein. Erfindungsgemäß sind die Glaselemente 1 einzeln mit dem Träger 2, der beispielsweise ein Lochblech sein kann, verbunden. Damit können diese entlang einer gekrümmten Fläche in einer Einzellage angeordnet werden und auf der dem Betrachter abgewandten Seite gezielt von Lichtleitfasern 3 beleuchtet werden, wobei zu erwähnen ist, daß in Fig. 2 nur eine schematische Anzahl eingezeichnet ist, in der Praxis kann die Anzahl der Lichtleitfasern wesentlich höher sein. Günstig erscheint bei den üblichen Deckenleuchten eine Anzahl von 50, vorzugsweise über 100 Lichtleitfasern, um eine insgesamt homogene Lichtverteilung zu erzielen. Die Anzahl der reflektierenden und/oder lichtbrechenden Körper 1 liegt typischerweise über 100, vorzugsweise sogar über 500, wobei das Verhältnis der Zahl der Körper zur Zahl der Lichtleitfasern günstigerweise zwischen 3:1 und 10:1, vorzugsweise zwischen 5:1 und 7:1 liegt. Damit lassen sich mit einer Lichtleitfaser eine überschaubare Zahl von Körpern (Glaselementen) gezielt anleuchten und damit eine wohl definierte Lichtverteilung erzielen.

Zur gezielten Raumausleuchtung kann die Leuchte gemäß den Fig. 1 und 2 noch zusätzliche Lichtquellen 5, insbesondere Halogenlampen mit Kaltlichtreflektoren, aufweisen.

Eine bevorzugtere Ausführungsform ist in den Fig. 3 und 4 dargestellt. Bei diesem Ausführungsbeispiel besteht der hauptsächliche Träger 2 aus einem Lochblech, durch das die Endbereiche 3a der Lichtleitfasern 3 geführt sind, von denen nur ein Teil dargestellt ist. Außerdem dient dasselbe Lochblech als Träger zur Einzelbefestigung der reflektierenden und/oder lichtbrechenden Körper 1 (beispielsweise facettierte Glaselemente, insbesondere aus Kristallglas, Lusterbehang oder sonstige Dekorationskörper). Von den Körpern 1 sind nur einige beispielhaft dargestellt. Sie sind im wesentlichen flächendeckend über die Fläche E verteilt.

In der Praxis hat sich gezeigt, daß ein Lochabstand zwischen 2 und 10 mm, vorzugsweise zwischen 3 und 5 mm für die Löcher des Lochbleches 2, welches günstigerweise aus Aluminium besteht, am günstigsten ist. Der Lochabstand ist günstigerweise 3 bis 10 mal kleiner als der Abstand der Körper 1. Dies erlaubt es, die Lage der Enden der Lichtleitfasern genau gegenüber den Körpern 1 auszurichten. Insbesondere ist es möglich, dort wo farbige Körper angeordnet sind, die Flächendichte der Lichtleitfaserenden zu erhöhen, um dort die Beleuchtungsdichte zu erhöhen, einerseits um spezielle Farbakzente zu setzen, andererseits um die durch die Farbe bedingte höhere Absorption in den Körpern 1 auszugleichen.

Die Lichtleitfasern enden beim in den Fig. 3 und 4 dargestellten Ausführungsbeispiel frei und sind vorzugsweise poliert, d.h. es besteht keine Notwendigkeit zur Verwendung spezieller Austrittslinsen. Im Hinblick auf eine hohe Brillianz bei der Beleuchtung ist die Strahlung aus freien Lichtleitfaserenden zudem von Vorteil. Wie die Fig. 3 zeigt, enden die Lichtleitfasern 3 im Raum zwischen dem Träger 2 und den reflektierenden und/oder lichtbrechenden Körpern 1, beleuchten diese also auf der vom Betrachter abgewandten Seite von hinten, sodaß das Licht durch diese Körper bzw. zwischen diesen Körpern nach außen tritt. Das Ende der Lichtleitfasern 3 kann auch knapp beim Träger 2 liegen.

Am Träger 2 sind die Körper 1 über Ketten 6 und Splinte 7 derart befestigt, daß sich eine Einzellage aus nebeneinanderliegenden (hier vorzugsweise gleichartigen) Körpern ergibt. Die Aufhängung über Ketten 6 ist einfach und erlaubt eine Distanz zwischen der Körpern 1 und dem Träger 2, wobei im Abstandsbereich die Lichtleitfasern 3 enden können.

Die Lichtleitfasern 3 sind zumindest zum Teil an Distanzhaltern 8 befestigt, über die der Träger 2 mit einem Grundkörper 9 der Leuchte verbunden ist. Im Raum zwischen dem Grundkörper 9 und dem Träger 2 kann die Lichtquelleneinheit 4 untergebracht sein, die in Fig. 3 aus Gründen der Übersichtlichkeit nicht dargestellt ist. Der Zwischenraum erlaubt es außerdem die Lichtleitfasern 3 zu führen.
Beim dargestellten Ausführungsbeispiel dient der Grundkörper selbst auch noch als Träger für die äußersten Reihen der Glaskörper 1, wobei diese entweder an Schienen 10 über Klammern 11 oder über einen starren Halter 12 befestigt sein können. In diesem Bereich ist also die Befestigungsart eine andere als über die Ketten 6 im großen zentralen Mittelbereich am Träger 2. Für den Betrachter sind diese Unterschiede freilich nicht erkennbar. Die Halter 12 können beispielsweise so ausgebildet sein, daß der Glasstein 1 darin festgeklebt ist und der Halter selbst am Grundkörper 9 bzw. Träger festgeschraubt ist.

Die Erfindung ist selbstverständlich nicht auf die dargestellten Ausführungsbeispiele beschränkt, beispielsweise können die Lichtleitfasern anstelle der Befestigung über Kabelbinder 13 an den Distanzhaltern 8 direkt in den Löchern des Loches 2 befestigt sein, beispielsweise durch Festkleben oder durch Verwendung spezieller Einsätze. Auch kann die Anzahl und Form der verwendeten reflektierenden und/oder lichtleitenden Körper von der dargestellten, im wesentlichen kugeligen, Form abweichen. Wenngleich die Einzelbefestigung der Körper am Träger 2 bevorzugt ist, kann grundsätzlich auch vorgesehen sein, kleinere Gruppen von Körpern, beispielsweise mit maximal 10 Steinen über einen gemeinsamen Halter am Träger 2 zu befestigen. Jedenfalls ist es aber günstig, wenn sich eine flächige Anordnung der Körper in einer (oder höchstens wenigen übereinanderliegenden) Lagen ergibt.

## Patentansprüche

1. Leuchte, insbesondere Deckenleuchte, mit mehreren reflektierenden und/oder lichtbrechenden Körpern, insbesondere facettierten Glaselementen, die mit über mehrere optische Lichtleitfasern geführtem Licht angestrahlt werden, wobei die Endbereiche der Lichtleitfasern in zumindest einem Träger gehalten sind, dadurch gekennzeichnet, daß die reflektierenden und/oder lichtbrechenden Körper (1) einzeln oder in Gruppen jeweils am Träger (2) befestigt sind.

2. Leuchte nach Anspruch 1, dadurch gekennzeichnet, daß zumindest ein Teil der reflektierenden und/oder lichtbrechenden Körper (1) jeweils einzeln über gesonderte Befestigungsvorrichtungen (6) am Träger (2) - vorzugsweise mit Abstand zu diesem - befestigt ist.

3. Leuchte nach Anspruch 2, dadurch gekennzeichnet, daß die Befestigungsvorrichtungen (6) zumindest teilweise Seile, Drähte oder Ketten aufweisen, an denen die reflektierenden und/oder lichtbrechenden Körper (1) hängen.

4. Leuchte nach Anspruch 2 oder 3, dadurch gekennzeichnet, daß die Befestigungsvorrichtungen zumindest teilweise Halteklammern (11) sind.

5. Leuchte nach einem der Ansprüche 2 bis 4, dadurch gekennzeichnet, daß die Befestigungsvorrichtungen zumindest teilweise Halter (12) aus starrem Material sind, die einerseits mit dem Träger (2) verbunden sind und andererseits einen reflektierenden und/oder lichtbrechenden Körper (1) tragen.

6. Leuchte nach einem der Ansprüche 1 bis 5, dadurch gekennzeichnet, daß zumindest ein Teil der reflektierenden und/oder lichtbrechenden Körper (1) direkt am Träger (2) befestigt, vorzugsweise festgeklebt, ist.

7. Leuchte nach einem der Ansprüche 1 bis 6, dadurch gekennzeichnet, daß bei derselben Leuchte reflektierenden und/oder lichtbrechenden Körper (1) über unterschiedliche Befestigungsarten bzw. -vorrichtungen am Träger (2) befestigt sind.

8. Leuchte nach einem der Ansprüche 1 bis 7, dadurch gekennzeichnet, daß die Anzahl der Lichtleitfasern (3) über 50, vorzugsweise über 100, liegt.

9. Leuchte nach einem der Ansprüche 1 bis 8, dadurch gekennzeichnet, daß die Anzahl der reflektierenden und/oder lichtbrechenden Körper (1) über 100, vorzugsweise über 500, liegt.

10. Leuchte nach einem der Ansprüche 1 bis 9, dadurch gekennzeichnet, daß das Verhältnis zwischen der Zahl der reflektierenden und/oder lichtbrechenden Körper (1) und der Zahl der Lichtleitfasern (3) zwischen 3:1 und 10:1, vorzugsweise zwischen 5:1 und 7:1, liegt.

11. Leuchte nach einem der Ansprüche 1 bis 10, dadurch gekennzeichnet, daß der Träger (2) zumindest ein - vorzugsweise gekrümmtes - Lochblech (2) umfaßt, wobei die Endbereiche (3a) der Lichtleitfasern (3) jeweils durch ein Loch des Lochbleches geführt sind und die reflektierenden und/oder lichtbrechenden Körper (1) zumindest teilweise über Befestigungsvorrichtungen (6) gehalten sind, die ebenfalls jeweils in ein Loch des Lochbleches, beispielsweise mittels eines Splintes (7), eingreifen.

12. Leuchte nach Anspruch 11, dadurch gekennzeichnet, daß der Lochabstand im Lochblech (2) zwischen 2 und 10 mm, vorzugsweise zwischen 3 und 5 mm liegt und vorzugsweise 3 bis 10 mal kleiner ist als der Abstand der reflektierenden und/oder lichtbrechenden Körper (1) untereinander.

13. Leuchte nach einem der Ansprüche 1 bis 12, dadurch gekennzeichnet, daß sie einen Grundkörper (9) aufweist, an dem der bzw. die Träger (2), vorzugsweise über mehrere Distanzhalter (8), befestigt ist bzw. sind.

14. Leuchte nach Anspruch 13, dadurch gekennzeichnet, daß im Raum zwischen Träger (2) und Grundkörper (9) zumindest eine Lichtquelle (4) angeordnet ist, deren Licht in die Lichtleitfasern eingespeist wird.

15. Leuchte nach Anspruch 13 oder 14, dadurch gekennzeichnet, daß zumindest ein Teil der Lichtleitfasern (3) an den Distanzhaltern (8) befestigt ist.

16. Leuchte nach einem der Ansprüche 1 bis 15, dadurch gekennzeichnet, daß alle reflektierenden und/oder lichtbrechenden Körper (1) in der Form gleichartig, vorzugsweise im wesentlichen kugelförmig, ausgebildet sind.

17. Leuchte nach einem der Ansprüche 1 bis 16, dadurch gekennzeichnet, daß die reflektierenden und/oder lichtbrechenden Körper (1) zumindest teilweise unterschiedliche Farbe aufweisen, wobei vorzugsweise bereichsweise reflektierenden und/oder lichtbrechenden Körper (1) gleicher oder ähnlicher Farbe nebeneinanderliegen.

18. Leuchte nach einem der Ansprüche 1 bis 17, dadurch gekennzeichnet, daß die Anzahl der Lichtleiterenden (3a) pro Fläche über die Trägerfläche variiert.

19. Leuchte nach Anspruch 17 und 18, dadurch gekennzeichnet, daß ein Bereich farbiger, insbesondere dunkelfarbiger, reflektierenden und/oder lichtbrechenden Körper (1) mehr Lichtleiterenden pro Fläche enden.

20. Leuchte nach einem der Ansprüche 1 bis 19, dadurch gekennzeichnet, daß die Lichtleitfasern (3) frei enden, wobei die Enden vorzugsweise poliert sind.

21. Leuchte nach Anspruch 20, dadurch gekennzeichnet, daß die freien Enden der Lichtleitfasern (3) mit Abstand vom Träger (2) liegen, vorzugsweise zwischen Träger (2) und den reflektierenden und/oder lichtbrechenden Körper (1).

22. Leuchte nach einem der Ansprüche 1 bis 21, dadurch gekennzeichnet, daß die reflektierenden und/oder lichtbrechenden Körper (1) nebeneinander in einer gedachten Ebene oder einer gedachten gekrümmten Fläche (E) angeordnet sind.

23. Leuchte nach Anspruch 22, dadurch gekennzeichnet, daß zumindest in einem Teilbereich, vorzugsweise über den ganzen Träger, der Abstand vom Träger (2) zur Lage der nebeneinanderliegenden reflektierenden und/oder lichtbrechenden Körper (1) im wesentlichen konstant ist.

24. Leuchte nach einem der Ansprüche 1 bis 23, dadurch gekennzeichnet, daß die Leuchte neben der die Lichtleitfasern (3) versorgenden Lichtquelle zusätzlich zumindest eine weitere Lichtquelle (5) aufweist, die direkt und/oder über einen Reflektor strahlt.
